# EUROPÄISCHE PATENTSCHRIFT

(11) **EP 0 512 481 B1**
(45) Veröffentlichungstag und Bekanntmachung des Hinweises auf die Patenterteilung: **18.05.1994**
(21) Anmeldenummer: 92107586.7
(22) Anmeldetag: 05.05.1992
(51) Int. Cl.: C02F 11/02, C02F 1/48, F26B 7/00

(54) **Verfahren und Einrichtung zum Trocknen von zu trocknendem Gut**
Process and apparatus for drying materials
Procédé et appareil pour sécher des matériaux

(30) Priorität: 10.05.1991 DE 4115408
(43) Veröffentlichungstag der Anmeldung: 11.11.1992
(73) Patentinhaber: SICOWA Verfahrenstechnik für Baustoffe GmbH & Co. KG, D-52072 Aachen (DE)
(72) Erfinder: Wosnitza, Franz, Dr., W-5100 Aachen (DE); Zimmermann, Georg, Dipl.-Phys., W-5100 Aachen (DE)
(74) Vertreter: Röhl, Wolf Horst, Dipl.-Phys., Dr.

(56) Entgegenhaltungen:
- EP-A- 0 105 174
- EP-A- 0 408 946
- DE-A- 3 734 281
- US-A- 4 909 899

## Beschreibung

Die Erfindung betrifft ein Verfahren zum Trocknen von Schlamm, insbesondere Klärschlamm, oder feuchtem Schüttgut, wobei das zu trocknende Gut durch Energiezufuhr mittels eines zwischen Elektroden erzeugten elektromagnetischen Wechselfeldes in einem abgeschlossenen Gefäß erwärmt und die durch die Erwärmung verdampfte Gutfeuchte als Wärmeübertragungsmedium zum Aufheizen des zu trocknenden Guts in einem von der Erwärmung im elektromagnetischen Wechselfeld getrennten Schritt verwendet wird, und eine Einrichtung zum Trocknen von Schlamm, insbesondere Klärschlamm, oder feuchtem Schüttgut mit einem abgeschlossenen Gefäß zur Aufnahme des zu trocknenden Guts mit einer in dem Gefäß angeordneten Elektroden aufweisenden Einrichtung zum Erwärmen des zu trocknenden Guts mittels eines elektromagnetischen Wechselfeldes sowie einer Einrichtung zum Erwärmen des zu trocknenden Gutes mittels der durch die Erwärmung im elektromagnetischen Wechselfeld erzeugten Gutfeuchte in einem von der Erwärmung im elektromagnetischen Wechselfeld getrennten Schritt.

Aus einer mechanischen Vorentwässerung stammender Klärschlamm wird üblicherweise konvektiv in einem Kontakt-, Scheiben-, Umluft-, Wirbelschichttrockner oder dergleichen getrocknet, wobei die dabei entstehenden Brüden an die Umgebung abgegeben werden, was neben dem damit verbundenen großen Energieverlust zu Umweltbelastungen und Geruchsbelästigungen führt.

Aus der DE-A-3 734 281 ist ein Trocknen von Schlamm oder feuchtem Schüttgut durch Erwärmung in einem Reaktorgehäuse mittels eines elektromagnetischen Wechselfeldes bekannt, bei dem die durch die Erwärmung verdampfte Gutfeuchte als Wärmeübertragungsmedium zum Aufheizen des zu trocknenden Guts in einem von der Erwärmung im elektromagnetischen Wechselfeld getrennten, vorgeschalteten Schritt verwendet wird. Hierbei wird das Entwässerungsgut mit verhältnismäßig hoher Ausgangsfeuchte in dem Reaktorgehäuse auf einer Transporteinrichtung durch mindestens ein Hochfrequenzfeld geführt und dabei weitgehend bis auf eine Restfeuchte entwässert, das entwässerte Material ausgetragen und die erhaltenen abgedampften Brüden zur Vorerwärmung des zu trocknenden Gutes benutzt und dann nachbehandelt. Der Transport des zu trocknenden Gutes zwischen den Kondensatorplatten hindurch führt wegen des zwischen den Kondensatorplatten und dem trockendnen Gut befindlichen großen Luftzwischenraum zu einer sehr ungünstigen Energieausnutzung und erfordert zudem einen hohen apparativen Aufwand für das Gefäß. Zudem führen die nach diesem Verfahren kondensierten Verdampfungsbrüden in der Regel eine Reihe von Schadstoffen ab.

Aufgabe der Erfindung ist es, ein Verfahren und eine Einrichtung der eingangs genannten Art zu schaffen, die energetisch günstiger arbeiten.

Dementsprechend ist verfahrensmäßig vorgesehen, daß das zu trocknende Gut unter deutlichem Überdruck von dem als Druckgefäß ausgebildeten Gefäß unter elektrisch isoliertem Berührungskontakt mit den im Druckgefäß befindlichen Elektroden zumindest während einer für die Erwärmung notwendigen Verweilzeit aufgenommen und anschliessend einer Entspannungstrocknung unterworfen wird.

Einrichtungsmäßig ist vorgesehen, daß das Gefäß als gegebenenfalls ein- und austrittsseitig ventiliertes Durchlauf-Druckgefäß mit darin in elektrisch isoliertem Berührungskontakt mit dem zu trocknenden Gut stehenden Elektroden ausgebildet und dem Druckgefäß ein Flash-Tank nachgeschaltet ist.

Durch den Berühungskontakt des zu trocknenden Guts mit gegen eine elektrischen Kontakt isolierten Elektroden und den dadurch hierzwischen fehlenden Luftraum wird eine bessere Ausnutzung der eingesetzten Energie beim Erwärmen erreicht, die durch die nachgeschaltete Entspannungstrocknung, die zu einer zusätzlichen Erhöhung des Trockensubstanzgehaltes des Gutes führt, weiter gesteigert wird. Die Entspannungstrocknung ist nur wegen der Überdruckfahrweise mit deutlichem Überdruck im Druckgefäß möglich.

Auf diese Weise wird umweltfreundliche elektrische Energie eingesetzt, um eine induktive oder vorzugsweise dielektrische Erwärmung des zu trocknenden Guts im (nieder- bis hochfrequenten) elektromagnetischen Wechselfeld vorzunehmen. Hierbei kann eine Mikrowellen- oder insbesondere eine Trocknung im Hochfrequenzfeld, z.B. mit Frequenzen von 13,56, 27,12 oder 40,58 MHz vorgenommen werden. Die verdampfte Gutfeuchte wird zum konvektiven und/oder kontaktiven Aufheizen, entweder zur Vor- oder zur Nachtrocknung, wobei gegebenenfalls zwei oder mehr Trocknungsschritte hintereinander geschaltet sein können, oder zur Trocknung in einem parallel geschalteten Kontakt- oder Konvektionstrockner verwendet, so daß sich eine energetisch sehr günstige Verfahrensführung ergibt.

Das zu trocknende Gut durchläuft das Durchlauf-Druckgefäß chargenweise, quasikontinuierlich oder kontinuierlich von unten nach oben oder von oben nach unten unter entsprechender Erwärmung. Im Druckgefäß wird allgemein ein deutlicher Überdruck im wesentlichen größer oder gleich 2 bar, insbesondere ein Druck zwischen 2 und 3 bar, aufrechterhalten.

Die Temperatur des zu trocknenden Guts wird zweckmäßigerweise zumindest während des konvektiven Aufheizens unter 150°C gehalten, damit bei diesem Aufheizen im wesentlichen nur Wasserdampf entsteht und im wesentlichen keine Entgasung des zu erwärmenden Guts stattfindet, so daß schließlich möglichst geringe Mengen an umweltbelastenden Abgasen abgegeben werden. Vorzugsweise wird das zu trocknende Gut während des gesamten Trocknungsvorgangs unter 150°C gehalten, jedoch kann auch beim Erwärmen im elektromagnetischen Wechselfeld über 150°C erwärmt, die verdampfte Gutfeuchte bei oder nach der Weiterverwendung kondensiert und das Kondensat dem Abwasser zugeführt werden, so daß auch dann im wesentlichen keine umweltverschmutzenden Emissionen an die Umgebungsluft stattfinden.

Zwischen der Erwärmungsstufe im elektromagnetischen Wechselfeld und der mit den Brüden hiervon betriebenen weiteren Erwärmungsstufe wird zweckmäßigerweise mit einem Schlammtemperaturunterschied von größer oder gleich 25°C gearbeitet, d.h. daß das zu trocknende Gut im elektromagnetischen Wechselfeld eine um mindestens 25°C höhere Temperatur als in der brüdenerhitzten Trocknungsstufe hat.

Weitere Ausgestaltungen der Erfindung sind den Unteransprüchen und der nachfolgenden Beschreibung zu entnehmen.

Die Erfindung wird nachstehend anhand der in den beigefügten Abbildungen dargestellten Ausführungsbeispiele näher erläutert.

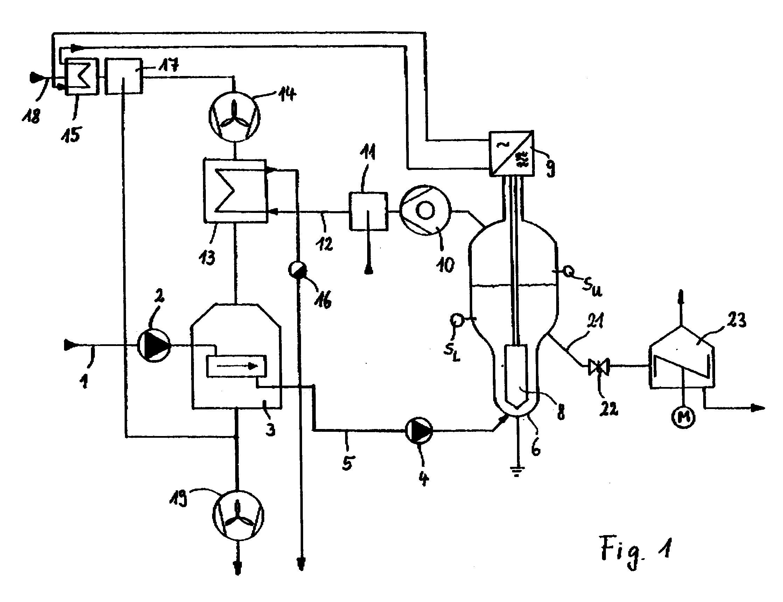

Fig. 1 bis 4 zeigen schematisch Einrichtungen zum Trocknen von Klärschlamm.

Bei der in Fig. 1 dargestellten Ausführungsform wird aus einer mechanischen Vorentwässerung stammender Klärschlamm über eine Leitung 1 etwa mittels einer Schlammpumpe 2 einem Umluftvortrockner 3 zugeführt und gelangt von dort ebenfalls beispielsweise über eine Schlammpumpe 4 und eine Leitung 5 ohne Schleppluft in ein geschlossenes Druckgefäß 6 zwischen zwei in den Klärschlamm eingetauchter, gegenüber dem Klärschlamm und gegeneinander elektrisch isolierter, als Kondensatorplatten dienender Elektroden 8, die an einem mit elektrischer Primärenergie betriebenen Hochfrequenzgenerator 9 angeschlossen sind, um dort dielektrisch erwärmt zu werden.

In dem Druckgefäß 6 wird der im Umluftvortrockner 3 vorerwärmte Klärschlamm auf eine Temperatur vorzugsweise unter 150°C unter Druck erhitzt. Die dabei entstehenden Brüden werden einem Turbobrüdenverdichter 10 zugeführt, der die Brüden verdichtet und an einen Einspritzkühler 11, dem Kühlwasser zum Herabsetzen der Überhitzungstemperatur der verdichteten Brüden und gleichzeitig zum weiteren Erzeugen von Dampf über eine Leitung 12 zugeführt wird, abgibt. Vom Einspritzkühler 11 gelangt der Dampf zu einem Wärmetauscher 13 zum Erwärmen von über einen Umluftventilator 14 dem Wärmetauscher 13 zugeführter Umluft.

Außerdem wird die vom Hochfrequenzgenerator 9 erzeugte Wärme über einen Kühlkreislauf (vorlaufseitig auf etwa 60 bis 70°C erwärmtes Wasser) einem Wärmetauscher 15 zur Umluftvorwärmung zugeführt, um auch diese Abwärme zur Umlufterwärmung zu nutzen.

Die vom Wärmetauscher 13 erwärmte Luft wird dem Umluftvortrockner 3 zugeführt, während das im Wärmetauscher 13 erzeugte Brüdenkondensat über einen Sammler 16 dem Abwasser zugeführt wird.

Abgekühlte Umluft aus dem Umluftvortrockner 3 wird wenigstens teilweise einem Vormischer 17 zugeführt, dem außerdem über eine Leitung 18 vorgewärmte Kaltluft zugeführt werden kann. Weiterhin ist ein Abluftventilator 19 zum teilweisen Abführen von Umluft an die Umgebung vorgesehen. Da die Temperatur der zur Vortrocknung verwendeten Umluft entsprechend niedrig, d.h. im Bereich von beispielsweise ca. 110°C, gehalten wird, werden hierdurch nur im wesentlichen Wasserdampf enthaltende Brüden erzeugt, die an die Umgebung ohne weiteres abgegeben werden können.

Da die Brüden aus dem Druckgefäß 6 nicht an die Umgebung abgegeben werden, sondern beim Verlassen des Wärmetauschers 13 - und gegebenenfalls nach weiterer Abkühlung - als Kondensat anfallen, kann die Erwärmung im Druckgefäß 6 auch über 150°C hinaus erfolgen.

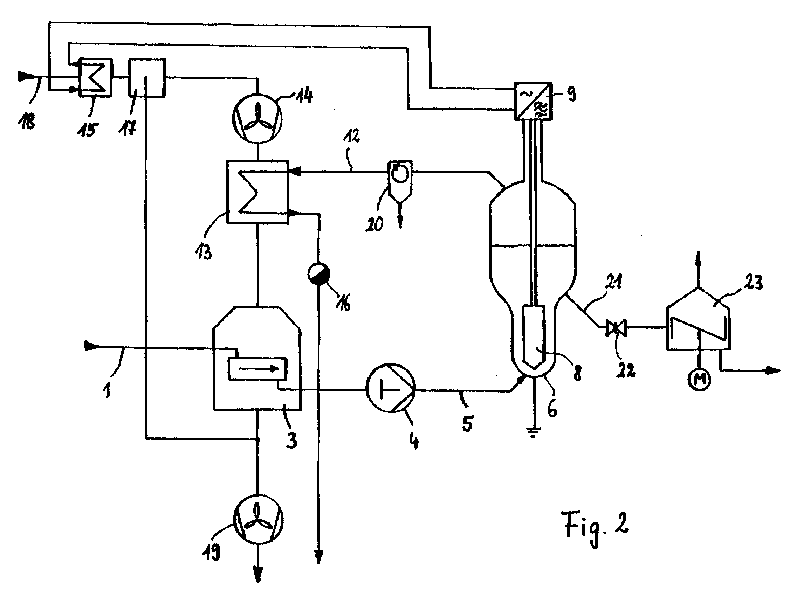

Bei der in Fig. 2 dargestellten Ausführungsform wird in das Druckgefäß 6 der vom Umluftvortrockner 3 kommende vorgewärmte Klärschlamm eingepumpt und mittels in den Klärschlamm eingetauchter, gegenüber dem Klärschlamm elektrisch isolierter Elektroden 8 dielektrisch in einem Hochfrequenzfeld erwärmt wird. Die dabei entstehenden Brüden haben einen Druck von beispielsweise 2 bis 3 bar, so daß sie im wesentlichen aus reinem Wasserdampf bestehen (da die Brüden später kondensiert werden, können auch höhere Drücke und damit höhere Temperaturen als 150°C verwendet werden). Die Brüden werden hier über einen Wasserabscheider 20 dem Wärmetauscher 13 zugeführt.

Der erwärmte Klärschlamm aus dem Druckgefäß 6 wird bei beiden vorstehend beschriebenen Ausführungsformen über eine Leitung 21 mit einem Ventil 22, das austragsseitig als Druckabschluß dient (eintragsseitig ist dies die Schlammpumpe 4), einem Flash-Tank 23 zugeführt. Infolge der Entspannung beim Eintritt in den Flash-Tank 23 findet eine Entspannungstrocknung statt, wodurch der Wassergehalt des Klärschlamms nochmals wesentlich herabgesetzt wird. Das Flashing im Flash-Tank 23 bewirkt außerdem vorteilhafterweise eine Pulver- oder Granulatbildung oder zumindest eine Desintegration des Trocknungsgutes. Der Austrag aus dem Flash-Tank 23 erfolgt beispielsweise über eine Förderschnecke.

Hierbei entstehender Wasserdampf kann gegebenenfalls noch zum Vorwärmen des Klärschlamms vor seinem Eintritt in dem Umluftvortrockner 3 verwendet werden.

Der aufwärts gerichtete Brüdenaustritt des Druckgefäßes 6 läßt kontinuierlich erwärmten und getrockneten Klärschlamm im Druckgefäß 6 entstehen, der sich von unten nach oben aufbaut. Über zwei Füllstandssensoren S_{L} und S_{U}, die oberhalb der Elektroden 8 angeordnet sind, kann ein batchweises Austragen des getrockneten Klärschlamms aus dem Druckgefäß 6 zum Flash-Tank 23 über entsprechend gesteuertes Öffnen des Ventils 22 erfolgen, indem dann, wenn das Niveau des Klärschlamms den oberen Füllstandssensor S_{U} erreicht, das Ventil 22 geöffnet und dann, wenn das Niveau des Klärschlamms den unteren Füllstandssensor S_{L} im wesentlichen benachbart zur Höhe der Austrittsöffnung zur Leitung 21 erreicht, das Ventil 22 wieder geschlossen wird. Bei geöffneten Ventil 22 drückt der Druck im Druckgefäß 6 den Klärschlamm heraus. Der Eintrag des Klärschlamms in das Druckgefäß 6 kann hierbei kontinuierlich erfolgen. - Stattdessen kann aber auch der Klärschlamm diskontinuierlich ein- und ausgetragen werden. - Wenn eine für die vorgesehene Erwärmung im Druckgefäß 6 ausreichende Energieübertragung erreicht wird, ist auch ein kontinuierlicher Ein- und Austrag des zu trockenden Guts möglich, so daß keine Füllstandssensoren notwendig sind und das Ventil 22 im wesentlichen Sicherheitsaufgaben erfüllt.

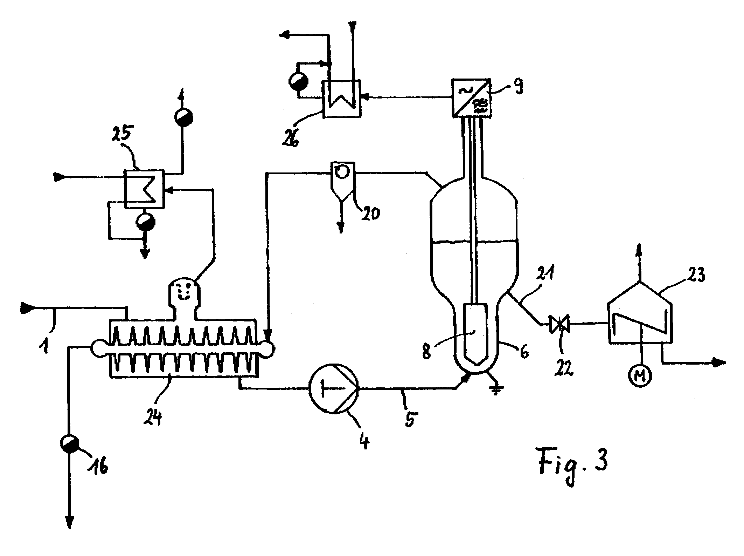

Bei der in Fig. 3 dargestellten Ausführungsform wird der in dem Druckgefäß 6 erzeugte Dampf direkt, d.h. ohne gasförmigen Zwischenkreis, in einem Schlammvortrockner 24 (einem Kontakt- oder Konvektionsvortrockner) zum Vorwärmen des Klärschlamms gegeben. Das durch die Abkühlung des Dampfes erzeugte Kondensat wird dem Abwasser zugeführt. Im Schlammvortrockner 24 durch die Vorwärmung entstehende Brüden werden in einem Brüdenkondensator 25 mittels Kühlwasser gekühlt und gemeinsam mit diesem als Kondensat dem Abwasser zugeleitet, so daß sich allenfalls eine geringfügige Gasemission ergibt. Der Hochfrequenzgenerator 9 wird durch im Kreislauf geführtes Kühlmittel gekühlt, das seinerseits in einem Wärmetauscher 26 durch frisches Kühlwasser gekühlt wird.

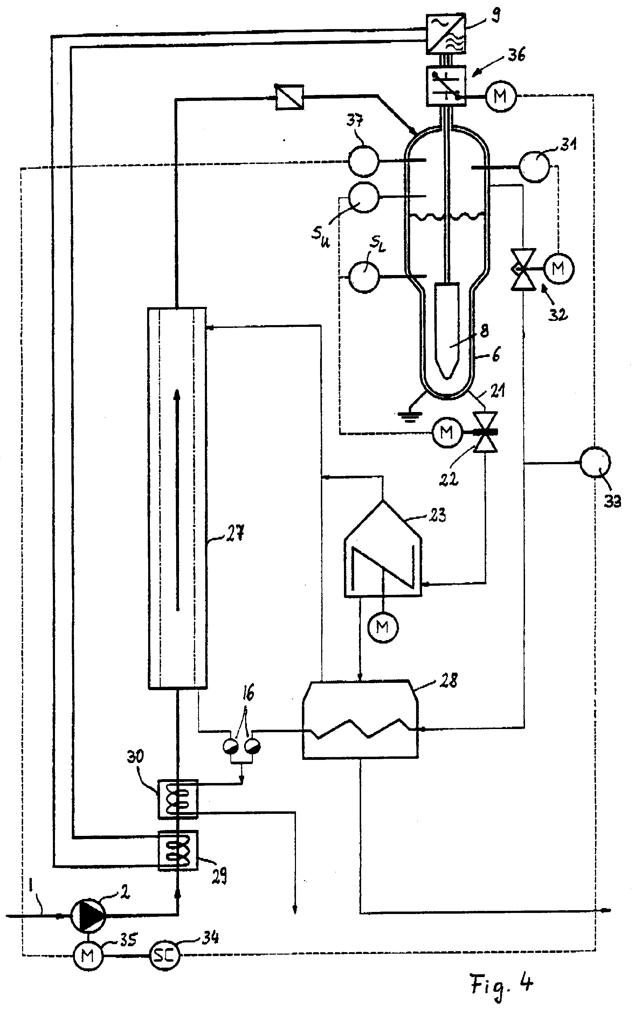

Bei der in Fig. 4 dargestellten Ausführungsform wird der Klärschlamm über die Pumpe 2 in einen Vorwärmer 27 gefördert, der beispielsweise ein Doppelmantelrohr o.dgl. eventuell mit einer Förderschnecke für den Klärschlamm ist, und insbesondere vertikal angeordnet ist, so daß der Klärschlamm nach oben durch den Vorwärmer 27 über eine mit einem Absperrventil versehene Leitung in das Druckgefäß 6 gefördert wird, um dort mittels elektrischer Primärenergie weiter beispielsweise bis etwa unter 150°C erwärmt zu werden. Vom Druckgefäß 6 gelangt der Klärschlamm in den Flash-Tank 23, wobei der hier frei werdende Dampf dem Vorwärmer 27 zur Klärschlammvorwärmung zugeführt wird. Der im Druckgefäß 6 gebildete Dampf wird einem konvektiven oder kontaktiven Nachtrockner 28, beispielsweise einem Scheiben- oder Kontakttrockner, dem der soweit vorgetrocknete Klärschlamm aus dem Flash-Tank 23 zugeführt wird, zugeführt und die in diesem erzeugten Brüden zusammen mit denjenigen aus dem Flash-Tank 23 dem Vorwärmer 27 zugeführt. - Die Abwärme des Hochfrequenzgenerators 9 und die Kondensatabwärme können über entsprechende, vor dem Vorwärmer 27 angeordnete Wärmetauscher 29, 30 zum anfänglichen Vorwärmen des Klärschlamms verwendet werden.

Der Druck innerhalb des Druckgefäßes 6 kann bei allen vorstehend beschriebenen Ausführungsformen über einen Drucksensor 31 überwacht werden, der ein Ventil 32 in der Leitung vom Druckgefäß 6 zum Nachtrokkner 28 steuert, so daß der Druck im Druckgefäß 6 konstant gehalten wird. Ein Sensor 33 kann ferner die Trocknungsbrüdenflußrate aus dem Druckgefäß 6 zum Nachtrockner 28 messen und so eine Gesamtregelung des Massenstroms (der durch einen von einem Steuerglied 34 gesteuerten Motor 35 für die Pumpe 2 eingestellt wird) und der Leistung des Hochfrequenzgenerators 9 (über ein Anpassglied 36 gesteuert) derart vornehmen, daß sich eine gleichbleibende Trocknungsrate und somit bei konstantem Trockensubstanzanteil des Eintragsklärschlamms auch ein konstanter Trockensubstanzanteil nach der Trocknung ergibt. Außerdem kann ein oberster Füllstandssensor 37 vorgesehen sein, dessen Ansprechen zu einem Abschalten des Motors 35 der Pumpe 2 führt.

Die Einspeisung der Hochfrequenzspannung kann vorzugsweise symmetrisch zum Erdpotential oder aber unsymmetrisch hierzu erfolgen.

Im Druckgefäß 6 sind die in den Klärschlamm eintauchenden Elektroden 8 beispielsweise in einem Mantel aus elektrisch isolierendem Keramikmaterial wie Al₂O₃ angeordnet vollständig gekapselt und werden beispielsweise durch Keramikkörper gestützt.

Eine Elektrode 8 kann durch die Wandung des Druckgefäßes 6 gebildet werden, in dem sich eine mittig angeordnete stabförmige Elektrode 8 zur Ausbildung eines Ringkondensators befindet. Die Ringelektrode 8 kann aber auch mit Abstand zur Wandung des Druckgefäßes 6 angeordnet sein, wobei der Klärschlamm von unten in den Bereich der Ringelektrode 8 eingepumpt wird und an deren Oberkante in den Ringraum zwischen der Wandung des Druckgefäßes und der Außenseite der Ringelektrode 8 überläuft, um von dort kontinuierlich abgeführt zu werden. Ansonsten kann der Klärschlamm über einen Füllstandsregler chargenweise ausgetragen werden.

Das Druckgefäß 6 läßt sich im übrigen platzsparend und unter Zwischenschaltung des Flash-Tanks 23 über dem Vortrockner 3 bzw. Vorwärmer 27 oder dem Nachtrockner 28 anordnen.

Die Trocknung von Klärschlamm ist zwar vorstehend als bevorzugt beschrieben, jedoch lassen sich auf diese Weise an sich beliebige Schlämme ebenso wie feuchtes Schüttgut energiesparend trocknen.

## Patentansprüche

1. Verfahren zum Trocknen von Schlamm, insbesondere Klärschlamm, oder feuchtem Schüttgut, wobei das zu trocknende Gut durch Energiezufuhr mittels eines zwischen Elektroden (8) erzeugten elektromagnetischen Wechselfeldes in einem abgeschlossenen Gefäß (6) erwärmt und die durch die Erwärmung verdampfte Gutfeuchte als Wärmeübertragungsmedium zum Aufheizen des zu trocknenden Gutes in einem von der Erwärmung im elektromagnetischen Wechselfeld getrennten Schritt verwendet wird, dadurch **gekennzeichnet**, daß das zu trocknende Gut unter Überdruck von dem als Druckgefäß ausgebildeten Gefäß (6) unter elektrisch isoliertem Berührungskontakt mit den im Druckgefäß (6) befindlichen Elektroden (8) zumindest während einer für die Erwärmung notwendigen Verweilzeit aufgenommen und anschließend einer Entspannungstrocknung unterworfen wird.

2. Verfahren nach Anspruch 1, dadurch gekennzeichnet, daß die Temperatur des zu trocknenden Guts zumindest beim Aufheizen unter 150°C gehalten wird.

3. Verfahren nach Anspruch 1 oder 2, dadurch gekennzeichnet, daß das Aufheizen konvektiv und/oder kontaktiv vorgenommen wird.

4. Verfahren nach einem der Ansprüche 1 bis 3, dadurch gekennzeichnet, daß das zu trocknende Gut im elektromagnetischen Wechselfeld um mindestens etwa 25°C höher erhitzt wird als in einer vorangehenden oder nachfolgenden, mit der verdampften Gutfeuchte arbeitenden Aufheizstufe.

5. Verfahren nach einem der Ansprüche 1 bis 4, dadurch gekennzeichnet, daß die Erwärmung in dem Druckgefäß (6) unter einem Druck von 2 bis 3 bar vorgenommen wird.

6. Verfahren nach einem der Ansprüche 1 bis 5, dadurch gekennzeichnet, daß der bei der Entspannung des zu trocknenden Guts nach Austrag aus dem Druckgefäß (6) entstehende Dampf zur Erwärmung des zu trocknenden Guts weiterverwendet wird.

7. Verfahren nach einem der Ansprüche 1 bis 6, dadurch gekennzeichnet, daß die Erwärmung in dem Druckgefäß (6) dielektrisch mittels eines Hochfrequenzfeldes vorgenommen wird.

8. Verfahren nach Anspruch 7, dadurch gekennzeichnet, daß die bei der Erzeugung des Hochfrequenzfeldes erzeugte Wärme zum Vorwärmen von Umluft, die für das Aufheizen für das zu trocknende Gut verwendet wird, eingesetzt wird.

9. Verfahren nach einem der Ansprüche 1 bis 8, dadurch gekennzeichnet, daß die verdampfte Gutfeuchte in Wärmeaustausch mit dem aus dem geschlossenen Druckgefäß (6) ausgetragenen, erwärmten Gut gebracht wird.

10. Verfahren nach einem der Ansprüche 1 bis 8, dadurch gekennzeichnet, daß die verdampfte Gutfeuchte zum Erwärmen von Luft verwendet wird, die ihrerseits das zu trocknende Gut konvektiv erwärmt.

11. Verfahren nach einem der Ansprüche 1 bis 10, dadurch gekennzeichnet, daß das Entspannungstrocknen über eine Füllstandsmessung des zu trocknenden Guts im Druckgefäßes (6) gesteuert wird.

12. Verfahren nach einem der Ansprüche 1 bis 11, dadurch gekennzeichnet, daß die Flußrate der Brüden aus dem Druckgefäß (6) gemessen und zur Steuerung des Massenstroms des zu trocknenden Guts in das Druckgefäß (6) und der Leistung zur Erzeugung des elektromagnetischen Wechselfeldes verwendet wird.

13. Einrichtung zum Trocknen von Schlamm, insbesondere Klärschlamm, oder feuchtem Schüttgut, mit einem abgeschlossenen Gefäß (6) zur Aufnahme des zu trocknenden Guts mit einer in dem Gefäß (6) angeordneten Elektroden (8) aufweisenden Einrichtung (8, 9) zum Erwärmen des zu trocknenden Guts mittels eines elektromagnetischen Wechselfeldes sowie einer Einrichtung zum Erwärmen des zu trocknenden Gutes mittels der durch die Erwärmung im elektromagnetischen Wechselfeld erzeugten Gutfeuchte in einem von der Erwärmung im elektromagnetischen Wechselfeld getrennten Schritt, dadurch **gekennzeichnet**, daß das Gefäß (6) als gegebenenfalls ein- und austrittsseitig ventiliertes Durchlauf- Druckgefäß mit darin in elektrisch isoliertem Berührungskontakt mit dem zu trocknenden Gut stehenden Elektroden (8) ausgebildet und dem Druckgefäß (6) ein Flash-Tank (23) nachgeschaltet ist.

14. Einrichtung nach Anspruch 13, dadurch gekennzeichnet, daß mindestens ein Trockner (3, 28), der mit oder ohne gasförmigen Zwischenkreis (10, 11, 12, 13) durch die im Druckgefäß (6) entstehenden Brüden als Wärmeübertragungsmedium derart betreibbar ist, daß das zu trocknende Gut in diesem eine Temperatur von 150°C nicht überschreitet, vorgesehen ist.

15. Einrichtung nach Anspruch 13 oder 14, dadurch gekennzeichnet, daß die Einrichtung (8, 9) zum Erwärmen im elektromagnetischen Wechselfeld zwei Kondensatorplatten (8) umfaßt, die nach außen isoliert und mit einem Hochfrequenzgenerator (9) verbunden sind.

16. Einrichtung nach Anspruch 15, dadurch gekennzeichnet, daß die Elektroden (8) einen vertikalen Koaxialkondensator bilden.

17. Einrichtung nach Anspruch 16, dadurch gekennzeichnet, daß die Zuführleitung für das Druckgefäß (6) bodenseitig innerhalb des Bereichs des vertikalen Koaxialkondensators mündet.

18. Einrichtung nach einem der Ansprüche 15 bis 17, dadurch gekennzeichnet, daß die Hochfrequenzspannung des Hochfrequenzgenerators (9) symmetrisch zum Erdpotential an die Elektroden (8) legbar ist.

19. Einrichtung nach einem der Ansprüche 15 bis 18, dadurch gekennzeichnet, das das Druckgefäß (6) mit darunter angeordnetem Flash-Tank (23) über dem Konventions- oder Kontakttrockner (3, 28) angeordnet ist.

20. Einrichtung nach einem der Ansprüche 14 bis 19, dadurch gekennzeichnet, daß ein Vorwärmer (27) für das zu trocknende Gut dem Druckgefäß (6) vorgeschaltet und mit Brüden aus dem Druckgefäß (6) nachgeschalteten Trocknern (23, 28) als Wärmeübertragungsmedium gespeist ist.

## Claims

1. Process for drying sludge, in particular sewage sludge or moist bulk material, in which the material to be dried is heated by supplying energy by means of an electromagnetic alternating field generated between electrodes (8) in a sealed vessel (6) and the material moisture evaporated by the heating is used as heat transfer medium for heating the material to be dried in a step which is separate from the heating in the electromagnetic alternating field, characterized in that the material to be dried is received at an overpressure by the vessel (6) constructed as a pressurized vessel (6) with electrically insulated contiguous contact with the electrodes (8) located in the pressurized vessel (6) at least for a residence time which is necessary for the heating and is then subjected to flash drying.

2. Process according to Claim 1, characterized in that the temperature of the material to be dried is kept below 150°C at least during heating.

3. Process according to Claim 1 or 2, characterized in that the heating is carried out convectively and/or by contact.

4. Process according to any of Claims 1 to 3, characterized in that the material to be dried is heated to at least about 25°C higher in the electromagnetic alternating field than in a preceding or subsequent heating stage employing the evaporated material moisture.

5. Process according to any of Claims 1 to 4, characterized in that the heating in the pressurized vessel (6) is carried out under a pressure of 2 to 3 bar.

6. Process according to any of Claims 1 to 5, characterized in that the steam produced during the flashing of the material to be dried after discharge from the pressurized vessel (6) is further used to heat the material to be dried.

7. Process according to any of Claims 1 to 6, characterized in that the heating in the pressurized vessel (6) is carried out dielectrically by means of a high-frequency field.

8. Process according to Claim 7, characterized in that the heat generated during the generation of the high-frequency field is used to preheat circulating air which is used to heat the material to be dried.

9. Process according to any of Claims 1 to 8, characterized in that the evaporated material moisture is brought into heat exchange with the heated material discharged from the sealed pressurized vessel (6).

10. Process according to any of Claims 1 to 8, characterized in that the evaporated material moisture is used to heat air which in turn convectively heats the material to be dried.

11. Process according to any of Claims 1 to 10, characterized in that the flash drying is controlled by a level measurement of the material to be dried in the pressurized vessel (6).

12. Process according to any of Claims 1 to 11, characterized in that the flow rate of the vapours from the pressurized vessel (6) is measured and used to control the mass flow of the material to be dried into the pressurized vessel (6) and the power to generate the electromagnetic alternating field.

13. Apparatus for drying sludges, in particular sewage sludge or moist bulk material, having a sealed vessel (6) for receiving the material to be dried, with an apparatus (8, 9) having electrodes (8) disposed in the vessel (6) for heating the material to be dried by means of an electromagnetic alternating field and an apparatus for heating the material to be dried by means of the material moisture generated by the heating in the electromagnetic alternating field in a step which is separate from the heating in the electromagnetic alternating field, characterized in that the vessel (6) is constructed as a through-type pressurized vessel optionally vented on the inlet and outlet side, with electrodes (8) therein, which are in electrically insulated contiguous contact with the material to be dried, and there is a flash tank (23) downstream of the pressurized vessel (6).

14. Apparatus according to Claim 13, characterized in that at least one dryer (3, 28) is provided which can be operated, with or without a gaseous intermediate circuit (10, 11, 12, 13), using the vapours produced in the pressurized vessel (6) as heat transfer medium in such a way that the material to be dried does not exceed a temperature of 150°C in said dryer.

15. Apparatus according to Claim 13 or 14, characterized in that the apparatus (8, 9) for heating in the electromagnetic alternating field comprises two capacitor plates (8) which are outwardly insulated and are connected to a high-frequency generator (9).

16. Apparatus according to Claim 15, characterized in that the electrodes (8) form a vertical coaxial capacitor.

17. Apparatus according to Claim 16, characterized in that the feed pipe for the pressurized vessel (6) discharges at the bottom inside the region of the vertical coaxial capacitor.

18. Apparatus according to any of Claims 15 to 17, characterized in that the high-frequency voltage of the high-frequency generator (9) can be applied to the electrodes (8) in a balanced manner with respect to ground potential.

19. Apparatus according to any of Claims 15 to 18, characterized in that the pressurized vessel (6) with flash tank (23) disposed underneath is disposed above the convection or contact dryer (3, 28).

20. Apparatus according to any of Claims 14 to 19, characterized in that a preheater (27) for the material to be dried is arranged upstream of the pressurized vessel (6) and is fed with vapours from dryers (23, 28) arranged downstream of the pressurized vessel (6) as heat transfer medium.

## Revendications

1. Procédé pour le séchage de schlamms, en particulier de boues de décantation, ou de matières humides en vrac, les matières à sécher étant chauffées à l'intérieur d'une cuve fermée (6) par apport énergétique au moyen d'un champ électromagnétique alternatif généré entre des électrodes (8), et l'humidité des matières évaporée par le chauffage étant utilisée comme agent caloporteur pour le chauffage de matières à sécher dans une étape distincte de l'opération de chauffage par le champ électromagnétique alternatif, caractérisé en ce que les matières à sécher sont reçues, au moins pendant un temps de séjour nécessaire au chauffage, dans la cuve (6) en surpression, laquelle est formée par une enceinte d'autoclave, et sont en contact électriquement isolé avec les électrodes (8) disposées dans ledit autoclave (6), et sont ensuite soumises à un séchage par détente.

2. Procédé selon la revendication 1, caractérisé en ce que la température des matières à sécher est maintenue, au moins lors du chauffage, en-dessous de 150 C°.

3. Procédé selon la revendication 1 ou 2, caractérisé en ce que le chauffage s'effectue par convection et/ou contact.

4. Procédé selon l'une des revendications 1 à 3, caractérisé en ce que les matières à sécher sont chauffées dans le champ électromagnétique alternatif à une température supérieure d'au moins 25° C à celle de l'étape de chauffage précédente ou consécutive s'effectuant avec l'humidité évaporée des matières.

5. Procédé selon l'une des revendications 1 à 4, caractérisé en ce que le chauffage à l'intérieur de l'autoclave (6) s'effectue sous une pression de 2 à 3 bars.

6. Procédé selon l'une des revendications 1 à 5, caractérisé en ce que la vapeur produite lors de la détente des matières à sécher, après leur sortie de l'autoclave (6), est réemployée pour le chauffage des matières à sécher.

7. Procédé selon l'une des revendications 1 à 6, caractérisé en ce que le chauffage dans l'autoclave (6) s'effectue de manière diélectrique au moyen d'un champ haute fréquence.

8. Procédé selon la revendication 7, caractérisé en ce que la chaleur produite par les moyens de génération du champ haute fréquence est utilisée pour pré-chauffer de l'air, lequel est à son tour utilisé pour le chauffage des matières à sécher.

9. Procédé selon l'une des revendications 1 à 8, caractérisé en ce que l'humidité évaporée des matières est amenée en contact d'échange de chaleur avec les matières chauffées provenant de l'autoclave fermé (6).

10. Procédé selon l'une des revendications 1 à 8, caractérisé en ce que l'humidité évaporée des matières est utilisée pour chauffer de l'air qui, à son tour, chauffe par convection les matières à sécher.

11. Procédé selon l'une des revendications 1 à 10, caractérisé en ce que le séchage par détente est piloté par l'intermédiaire d'une mesure de niveau des matières à sécher dans l'autoclave (6).

12. Procédé selon l'une des revendications 1 à 11, caractérisé en ce que le débit des buées s'échappant de l'autoclave (6) est mesuré et utilisé pour piloter le flux de masse des matières à sécher vers l'autoclave (6) et la puissance nécessaire pour produire le champ électromagnétique alternatif.

13. Installation pour le séchage de schlamms, en particulier de boues de décantation ou de matières humides en vrac, comportant une cuve fermée (6) pour la réception des matières à sécher, un dispositif (8,9) muni d'électrodes (8) disposées dans ladite cuve (6) pour le chauffage des matières à sécher au moyen d'un champ électromagnétique alternatif, ainsi qu'un dispositif pour le chauffage de matières à sécher au moyen de l'humidité produite par le chauffage dû au champ électromagnétique alternatif, au cours d'une étape distincte du chauffage effectué dans le champ électromagnétique alternatif, caractérisée en ce que la cuve (6) est formée d'une enceinte d'autoclave, éventuellement à fonctionnement en continu, et munie de vannes d'entrée et de sortie, comportant des électrodes (8) en contact électriquement isolé avec les matières à sécher, et en ce qu'une cuve de détente (23) est disposée en aval de l'autoclave (6).

14. Installation selon la revendication 13, caractérisée en ce qu'elle comporte au moins un sécheur (3,28), pouvant fonctionner, avec ou sans circuit gazeux intermédiaire (10,11,12,13), avec les buées formées dans l'autoclave (6) comme moyen caloporteur, de telle sorte que les matières à y sécher ne dépassent pas une température de 150 C°.

15. Installation selon la revendication 13 ou 14, caractérisée en ce que le dispositif (8,9) comprend, pour le chauffage dans le champ électromagnétique alternatif, deux plaques de condensateur (8) isolées de l'extérieur et connectées à un générateur haute fréquence (9).

16. Installation selon la revendication 15, caractérisée en ce que les électrodes (8) forment un condensateur coaxial vertical.

17. Installation selon la revendication 16, caractérisée en ce que la conduite d'alimentation de l'autoclave (6) débouche au niveau du fond à l'intérieur de la zone du condensateur coaxial vertical.

18. Installation selon l'une des revendications 15 à 17, caractérisée en ce que la tension haute fréquence du générateur haute fréquence (9) peut être appliquée aux électrodes (8) symétriquement au potentiel de la terre.

19. Installation selon l'une des revendications 15 à 18, caractérisée en ce que la cuve de détente (23) est disposée en dessous de l'autoclave (6), et le sécheur par convection ou par contact (3,28) est disposé en dessous de la cuve de détente (23).

20. Installation selon l'une des revendications 14 à 19, caractérisée en ce qu'un pré-chauffeur (27) pour les matières à sécher est monté en amont de l'autoclave (6) et alimenté, en tant que moyen caloporteur, par les buées provenant des sêcheurs (23,28) montés en aval de ladite autoclave (6).
